# EUROPEAN PATENT APPLICATION

(11) **EP 4 618 573 A1**
(43) Date of publication of application: **17.09.2025**
(21) Application number: 23888672.5
(22) Date of filing: 06.11.2023
(51) Int. Cl.: H04N 23/55, G02B 17/08, G03B 15/00, G03B 17/17, G03B 37/00, H04N 23/695

(54) **OPTICAL DEVICE AND IMAGING DEVICE**

(30) Priority: 11.11.2022 JP 2022181189
(71) Applicant: Kyocera Corporation, Kyoto-shi, Kyoto 612-8501 (JP)
(72) Inventor: SUGAHARA Shun, Kyoto-shi, Kyoto 612-8501 (JP); HAYASHI Yusuke, Kyoto-shi, Kyoto 612-8501 (JP); SATO Masayuki, Kyoto-shi, Kyoto 612-8501 (JP)
(74) Representative: Viering, Jentschura & Partner mbB Patent- und Rechtsanwälte
(86) International application number: PCT/JP2023/039951
(87) International publication number: WO 2024/101325

(57) **Abstract**

An optical device includes: an optical system configured to focus incident first light and form an image in a specified area; an optical element configured to guide second light to the specified area, the second light having a principal ray that is incident on the optical system and angle between which and an optical axis of the optical system differs from angle between a principal ray of the first light and the optical axis of the optical system; and a prism located in a region surrounded by the optical system, the optical element, and the specified area.

## Description

### CROSS-REFERENCE TO RELATED APPLICATIONS

This application claims the benefit of priority of Japanese Patent Application No. 2022-181189 filed on November 11, 2022, the entire contents of which are incorporated herein by reference.

### TECHNICAL FIELD

The present disclosure relates to an optical device and an imaging device.

### BACKGROUND OF INVENTION

An imaging optical system configured to form an image of an observation target has various physical characteristics such as the focal length and the field angle. When the focal length is long, an enlarged image of the observation target is formed, and thus, detailed optical information on a distant observation target, in other words, enlarged optical information can be obtained. The wider the field angle, the wider the range within which optical information can be obtained from observation targets. However, the focal length and the field angle are in a trade-off relationship. The longer the focal length, the narrower the field angle, and the shorter the focal length, the wider the field angle.

Hence, the focal length is adjusted depending on the situation so as to obtain desired optical information. For example, a zoom lens included in the imaging optical system is moved to adjust the focal length. Alternatively, the focal length is adjusted by switching between multiple single-focus lenses (see Patent Literatures 1 and 2).

### CITATION LIST

### PATENT LITERATURE

Patent Literature 1: Japanese Unexamined Patent Application Publication No. 11-311832
Patent Literature 2: Japanese Unexamined Patent Application Publication No. 2004-279556

### SUMMARY

In an embodiment of the present disclosure, an optical device includes an optical system, an optical element, and a prism. The optical system focuses incident first light and forms an image in a specified area. The optical element guides second light to the specified area, the second light having a principal ray that is incident on the optical system and angle between which and an optical axis of the optical system differs from angle between a principal ray of the first light and the optical axis of the optical system. The prism is located in a region surrounded by the optical system, the optical element, and the specified area.

In an embodiment of the present disclosure, an imaging device includes the optical device mentioned above and an imaging element including an imaging area overlapping the specified area.

### BRIEF DESCRIPTION OF THE DRAWINGS

FIG. 1 is a configuration diagram illustrating a schematic configuration of an imaging device according to a first embodiment.
FIG. 2 is a diagram illustrating an imaging device viewed in a direction perpendicular to the optical axis to present a variation of the optical elements in FIG. 1.
FIG. 3 is a diagram illustrating an imaging device viewed in a direction perpendicular to the optical axis to present another variation of the optical elements in FIG. 1.
FIG. 4 is a diagram illustrating an imaging device viewed in a direction perpendicular to the optical axis to present still another variation of the optical elements in FIG. 1.
FIG. 5 is a diagram illustrating an imaging device viewed in a direction perpendicular to the optical axis to present still another variation of the optical elements in FIG. 1.
FIG. 6 is a diagram illustrating an imaging device viewed in a direction perpendicular to the optical axis to present still another variation of the optical elements in FIG. 1.
FIG. 7 is a diagram illustrating an imaging device viewed in the normal direction of the light reception area to present still another variation of the optical elements in FIG. 1.
FIG. 8 is a diagram illustrating an imaging device viewed in the normal direction of the light reception area to present still another variation of the optical elements in FIG. 1.
FIG. 9 is a diagram for explaining physical characteristics of the imaging element and the optical system in FIG. 1.
FIG. 10 is a conceptual diagram for explaining an image reaching the light reception area in FIG. 1.
FIG. 11 is a diagram illustrating an imaging device viewed in the normal direction of the light reception area to present still another variation of the optical elements in FIG. 1.
FIG. 12 is a diagram illustrating an imaging device viewed in the normal direction of the light reception area to present still another variation of the optical elements in FIG. 1.
FIG. 13 is a diagram illustrating an imaging device viewed in the normal direction of the light reception area to present still another variation of the optical elements in FIG. 1.
FIG. 14 is a diagram illustrating an imaging device viewed in the normal direction of the light reception area to present still another variation of the optical elements in FIG. 1.
FIG. 15 is a diagram illustrating an imaging device viewed in the normal direction of the light reception area to present still another variation of the optical elements in FIG. 1.
FIG. 16 is a diagram illustrating an imaging device viewed in the normal direction of the light reception area to present still another variation of the optical elements in FIG. 1.
FIG. 17 is a conceptual diagram for explaining how a superimposed image reaching the light reception area in FIG. 1 is formed.
FIG. 18 is a conceptual diagram for explaining a process of the controller in FIG. 1 generating a restored image from a superimposed image.
FIG. 19 is a flowchart for explaining distance-measurement processing executed by the controller in FIG. 1.
FIG. 20 is a diagram illustrating a schematic configuration example of an imaging device according to a second embodiment.
FIG. 21 is a diagram illustrating an example of a superimposed image including the images formed by each of two imaging optical systems.
FIG. 22 is a diagram illustrating an example in which images of object points outside the direct field angle in the configuration of FIG. 20 are formed.
FIG. 23 is a diagram illustrating a schematic configuration example of an imaging device according to a third embodiment.
FIG. 24 is a configuration diagram illustrating a schematic configuration of an imaging device according to a fourth embodiment.
FIG. 25 is a conceptual diagram for explaining image components reaching the light reception area in FIG. 24.
FIG. 26 is a conceptual diagram for explaining image components reaching the light reception area in a variation of FIG. 20.
FIG. 27 is a conceptual diagram for explaining image components reaching the light reception area in another variation of FIG. 20.
FIG. 28 is a configuration diagram illustrating a schematic configuration of an imaging device according to a fifth embodiment.
FIG. 29 is a configuration diagram for explaining the pixel structure of an imaging element in FIG. 28.

### DESCRIPTION OF EMBODIMENTS

By switching the focal length, enlarged optical information and wide-range optical information can be provided separately. However, enlarged optical information in a wide range cannot be obtained at one time. The present disclosure makes it possible to generate enlarged optical information in a wide range.

Hereinafter, embodiments of the present disclosure will be described with reference to the drawings. In terms of the constituents in the following drawings, the same constituents are denoted by the same symbols.

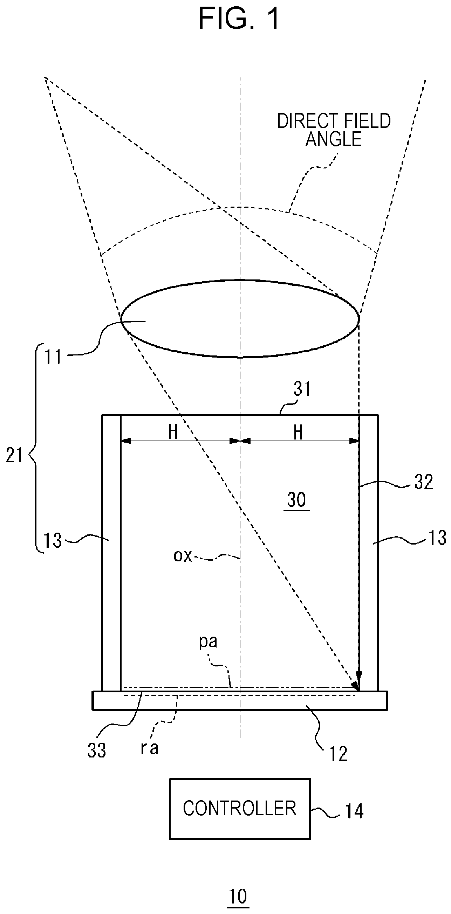

As illustrated in FIG. 1, in a first embodiment of the present disclosure, an imaging device 10 includes an optical device 21, an imaging element 12, and a prism 30. The imaging device 10 may further include a controller 14. The optical device 21 includes an imaging optical system 11 and optical elements 13. The imaging optical system 11 is also simply referred to as the optical system.

The imaging optical system 11 focuses light or light flux incoming from subjects and forms an image. The light or light flux incoming from a subject is also referred to as subject light or subject light flux. The imaging optical system 11 focuses incident first light and forms an image in a specified area pa. The first light may be light emitted by object points located within the field angle of the imaging optical system 11 alone. The specified area pa may be, for example, an imaginary plane or curved surface in three-dimensional space, the center of which intersects the optical axis ox of the imaging optical system 11. Hereinafter, the field angle of the imaging optical system 11 alone, in other words, the field angle of the imaging optical system 11 without the optical elements 13, is referred to as the direct field angle. The imaging optical system 11 is composed of an optical element that focuses light or light flux emitted from object points at different positions at different image points and forms an image with the optical element alone, in other words, without the optical elements 13. The optical element composing the imaging optical system 11 is, for example, a lens, a mirror, an aperture, or the like.

The imaging optical system 11 need not be image-space telecentric. In other words, the angle of the principal ray of any light flux passing through the imaging optical system 11 with respect to the optical axis may be larger than 0°. However, the imaging optical system 11 may be image-space telecentric.

The optical elements 13 guide second light incident on the imaging optical system 11 to the specified area pa. As for the second light, the angle between the optical axis ox of the imaging optical system 11 and its principal ray incident on the imaging optical system 11 differs from that of the first light. The second light may be light emitted from object points located outside the field angle of the imaging optical system 11, in other words, outside the direct field angle. Hence, the angle between the principal ray of the second light and the optical axis ox may be larger than the angle between the principal ray of the first light and the optical axis ox. The principal ray may be any of the light beam passing through the center of the aperture stop of the imaging optical system 11, the light beam passing through the center of the entrance pupil of the imaging optical system 11, or the light beam at the center of the light flux emitted from a certain object point and incident on the imaging optical system 11. The optical elements 13 may focus the second light having passed through the imaging optical system 11 and form an image in the specified area pa.

The optical elements 13 may be mirrors configured to reflect the second light and guide it to the specified area pa. The reflection surface of each mirror may be parallel to the optical axis ox of the imaging optical system 11. However, the reflection surface of each mirror is not limited to being parallel to the optical axis ox.

The prism 30 is located between the imaging optical system 11 and the imaging element 12 and between the two optical elements 13. In other words, the prism 30 is located in the region surrounded by the imaging optical system 11, and the optical elements 13, and the specified area pa. The prism 30 is composed of a transparent material such as glass or a resin, for example. The prism 30 includes a first surface 31 facing the imaging optical system 11. The prism 30 includes second surfaces 32 facing the optical elements 13. The prism 30 includes a third surface 33 facing the imaging element 12.

Light or light flux from a subject, having passed through the imaging optical system 11, is incident on the first surface 31 of the prism 30, passes through the prism 30, and is incident on the imaging element 12. The imaging element 12 includes a light reception area ra. The imaging element 12 captures images of the light incident on the light reception area ra. The light reception area ra may also be referred to as the imaging area. The imaging optical system 11 is configured to focus subject light or subject light flux and form images in the light reception area ra of the imaging element 12 with the refraction of light at the first surface 31 of the prism 30 taken into account. The optical element located closest to the imaging element 12 in the imaging optical system 11 may be integrated with the first surface 31 of the prism 30. The prism 30 may be included in the imaging optical system 11 and may function as an optical element located closest to the imaging element 12 in the imaging optical system 11.

The second surfaces 32 of the prism 30 are in contact with the reflection surfaces of the mirrors composing the optical elements 13. The second surfaces 32 of the prism 30 may be integrated with the optical elements 13. Specifically, the second surfaces 32 of the prism 30 may function as the reflection surfaces of the mirrors composing the optical elements 13. When the second surfaces 32 of the prism 30 function as the reflection surfaces of the mirrors, the surfaces of the transparent member may be coated with a material having a high reflectance such as a metal or a resin.

The prism 30 may include a surface in the third surface 33 that is in contact with the surface of a cover of the imaging element 12. The prism 30 may be integrated with the cover of the imaging element 12.

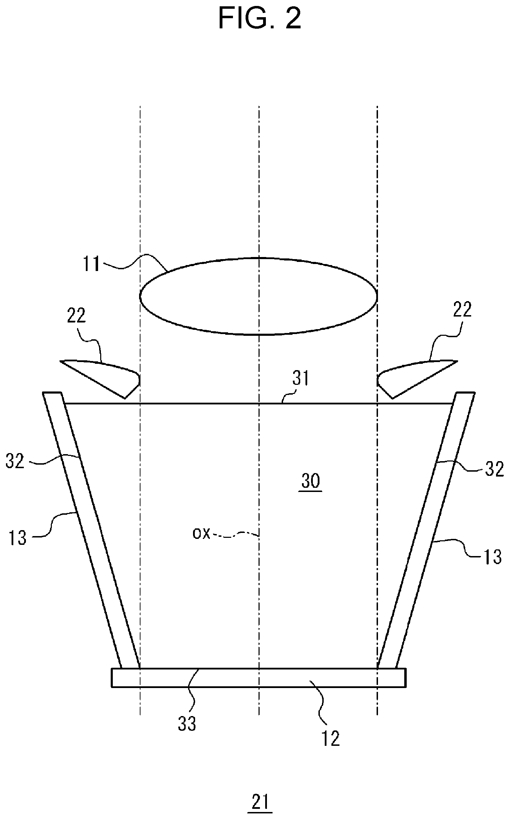

As illustrated in FIG. 2, the reflection surfaces of the mirrors may be inclined with respect to the optical axis ox in an orientation of outward inclination in which each mirror faces a direction toward the imaging optical system 11. In the orientation of the outward inclination, the field angle of the optical device 21 as a whole can be wider than in the configuration in which the reflection surfaces of the mirrors are parallel to the optical axis ox. Also in this case, the prism 30 may be located between the reflection surfaces of the mirrors composing the optical elements 13.

In a configuration of the outward inclination, the optical device 21 may include first lenses 22 for optical-path-length adjustment, located between the imaging optical system 11 and the optical elements 13, which are mirrors. Providing the first lenses 22 can reduce a positional deviation of the in-focus position from the specified area pa, caused when the optical path length is longer than in the configuration in which the reflection surfaces of the mirrors are parallel to the optical axis ox. In a configuration in which the mirrors include surfaces parallel to a direction perpendicular to the optical axis ox, such as plane mirrors, the first lenses 22 may be cylindrical lenses. The first lenses 22 may be located, with respect to the optical axis ox, outside the lines connecting the principal rays of the first light passing through outer edges of the exit pupil of the imaging optical system 11, to the specified area pa.

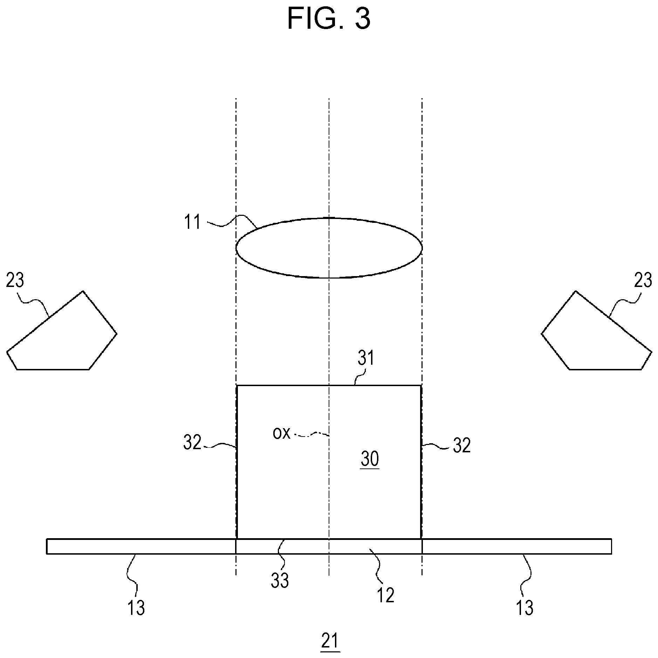

In a configuration of outward inclination, the optical device 21 may include prisms 23, as illustrated in FIG. 3. Second light may be guided to the specified area pa by being reflected on the optical elements 13, which are mirrors, and being further reflected by the prisms 23. Providing the prisms 23 enable the inclination angle of the mirrors to be increased with respect to the optical axis ox in a configuration of outward inclination. Also in this case, the prism 30 may be located on the imaging element 12. The prisms 23 may be in contact with at least part of the prism 30. The prisms 23 may be integrated with the prism 30.

In a configuration of outward inclination, the optical elements 13, which are mirrors, may be, for example, plane mirrors, curved mirrors, digital mirror devices (DMDs), and Fresnel mirrors.

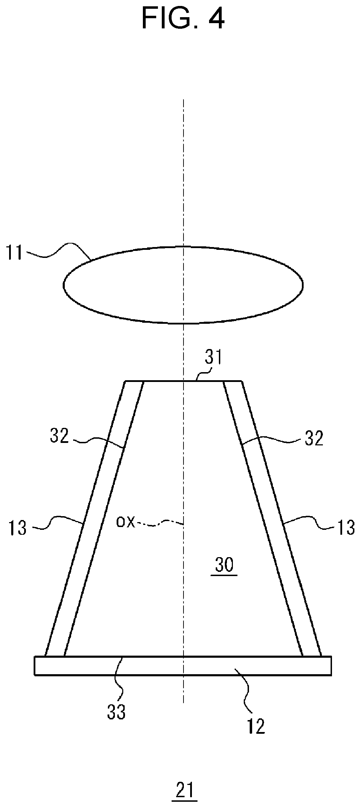

As illustrated in FIG. 4, the reflection surfaces of the mirrors may be inclined with respect to the optical axis ox in an orientation of inward inclination in which each mirror faces a direction toward the image formation plane of the imaging optical system 11. In an orientation of inward inclination, the optical device 21 as a whole can be smaller than in the configuration in which the reflection surfaces of the mirrors are parallel to the optical axis ox. Also in this case, the prism 30 may be located between the reflection surfaces of the mirrors composing the optical elements 13.

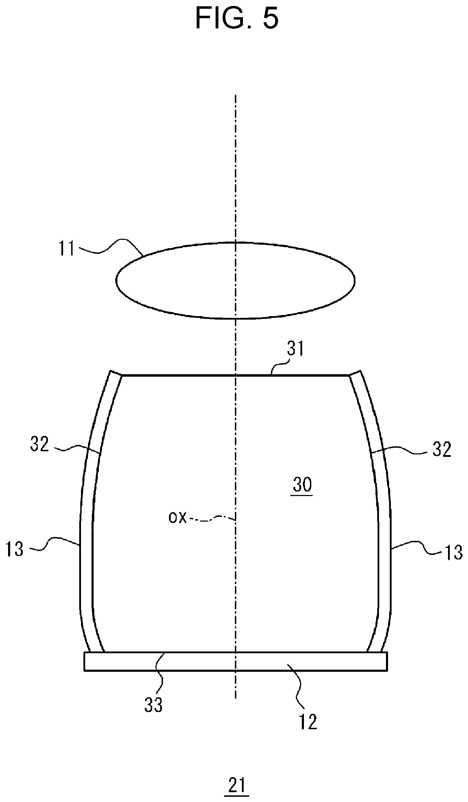

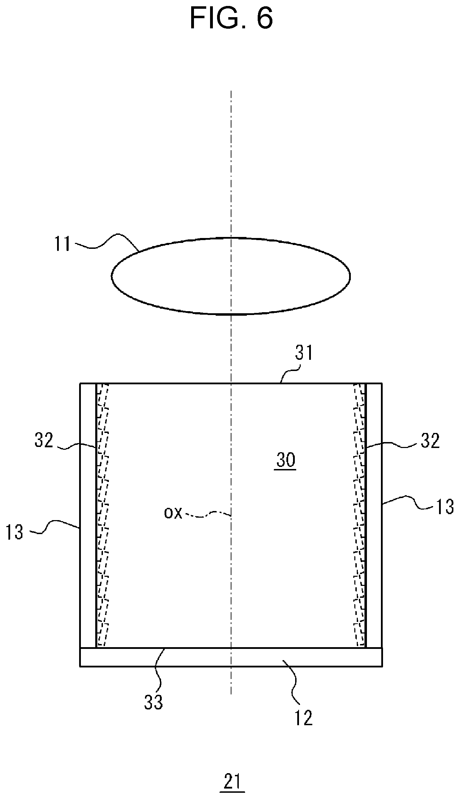

In a configuration of inward inclination, the optical elements 13, which are mirrors, may be, for example, plane mirrors, curved mirrors as illustrated in FIG. 5, or DMDs or Fresnel mirrors as illustrated in FIG. 6. The prism 30 may be located between the reflection surfaces of the mirrors in FIG. 5 composing the optical elements 13. The prism 30 may be located between the DMDs or the Fresnel mirrors in FIG. 6. When the mirrors in FIG. 6 are DMDs, the prism 30 may be located so as not to hinder the operation of the DMDs.

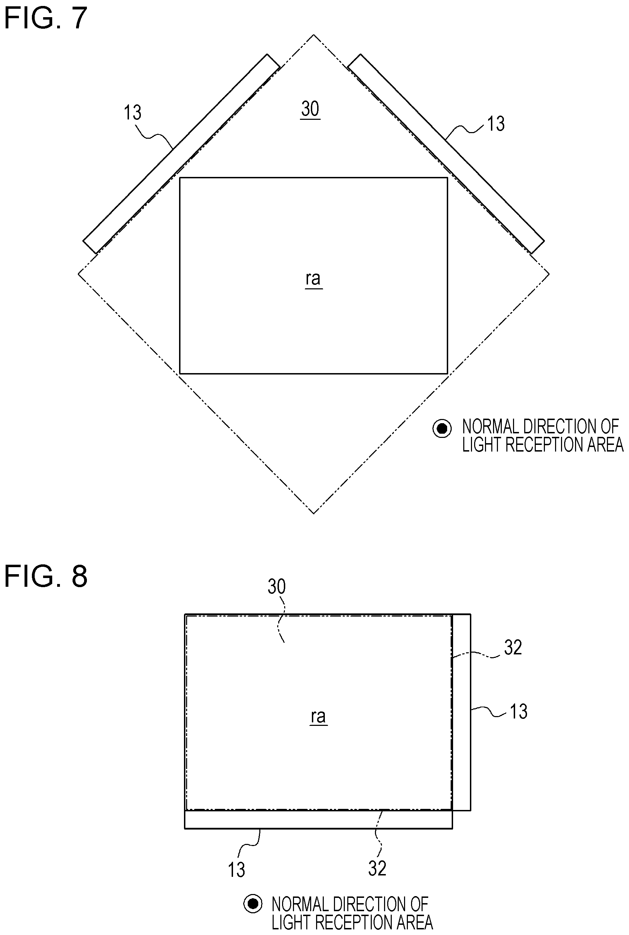

The reflection surface of each mirror may be parallel to one side of a rectangular light reception area ra of the imaging element 12 described later. Alternatively, as illustrated in FIG. 7, the reflection surfaces of the mirrors may intersect one side of the light reception area ra. Also in this case, the prism 30 may be located along the reflection surfaces of the mirrors or may be located in contact with the reflection surfaces of the mirrors. A configuration in which the reflection surfaces of the mirrors intersect one side of the light reception area ra can improve the accuracy of separation by an image separation model described later. Note that in the configuration in which the reflection surfaces of the mirrors intersect one side of the light reception area ra, it is preferable that the optical elements 13 be located such that the area of the light reception area ra overlapped by the region between the two straight lines extended perpendicularly from both ends of each optical element 13, which is a mirror, is largest as viewed in the normal direction of the light reception area ra.

As viewed from the direction of the optical axis ox of the imaging optical system 11, the mirrors may be located outside the exit pupil of the imaging optical system 11. More specifically, the mirrors may be located such that the reflection surfaces are located outside the exit pupil of the imaging optical system 11. Alternatively, the mirrors may be located inside the exit pupil as viewed in the direction of the optical axis ox. In particular, in a configuration in which the light reception area ra is smaller than the diameter of the pupil, the mirrors may be located inside the exit pupil.

The mirrors may include multiple plane mirrors. At least one set of two plane mirrors out of the multiple plane mirrors may be located such that their reflection surfaces face and are parallel to each other. Alternatively, the plurality of plane mirrors may be two plane mirrors and be located such that their reflection surfaces are orthogonal to each other as illustrated in FIG. 8. Two plane mirrors the reflection surfaces of which are orthogonal to each other may be parallel to two sides, perpendicular to each other, of a rectangular light reception area ra. Each plane mirror may be in close contact with an outer edge of the light reception area ra of the imaging element 12 in the normal direction of the plane mirror. Alternatively, a configuration in which each plane mirror is not in close contact with an outer edge of the light reception area ra in the normal direction of the plane mirror, and a gap is present is possible. Also in this case, the prism 30 may be located along the reflection surfaces of the mirrors or may be located in contact with the reflection surfaces of the mirrors.

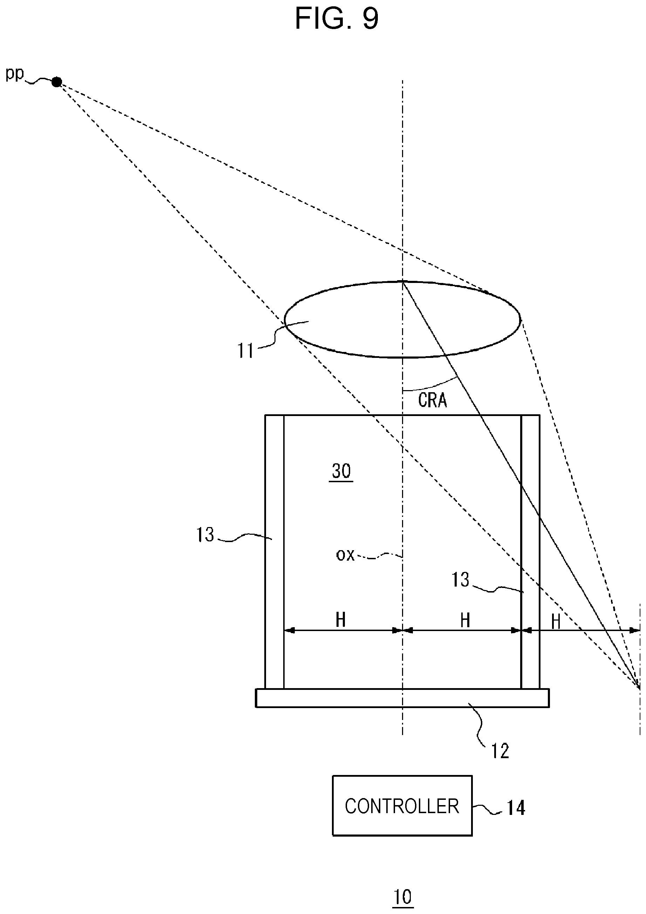

As illustrated in FIG. 9, the distance H between the optical axis ox and each of the two plane mirrors, the reflection surfaces of which are parallel to each other, may be equal. The two plane mirrors parallel to each other, the imaging optical system 11, and the imaging element 12 may be designed and arranged such that CRA ≤ tan-1(H/B) is satisfied, where CRA is the angle between the optical axis ox and the principal ray, determined by the imaging optical system 11, of the light flux emitted from an object point pp at the angle twice the direct field angle, and B is the backfocus of the imaging optical system 11. Also in this case, the prism 30 may be located between the reflection surfaces of the mirrors composing the optical elements 13.

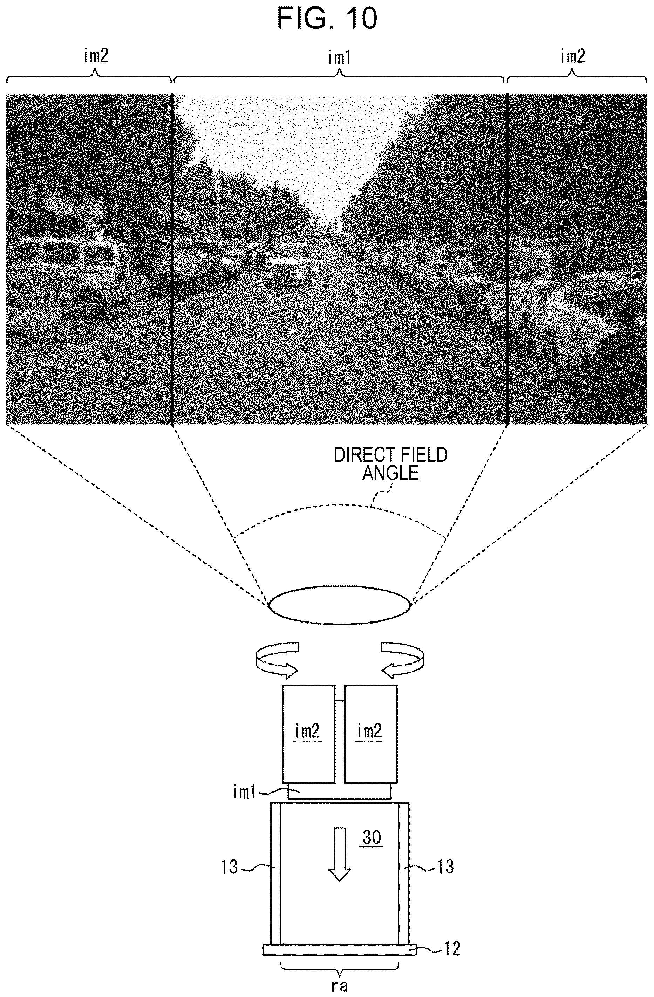

As described later, with the combination of the location of the imaging element 12 in the imaging device 10 and the configuration as described above, first image components im1 associated with the first light reach the light reception area ra of the imaging element 12 without the intervention of the optical elements 13, as illustrated in FIG. 10. The first image components im1 associated with the first light, more specifically, correspond to the images of subjects located within the direct field angle. In addition, second image components im2 associated with the second light reach the light reception area ra, being inverted by the intervention of the optical elements 13. The second image components im2 associated with the second light, more specifically, correspond to the images of subjects located outside the direct field angle.

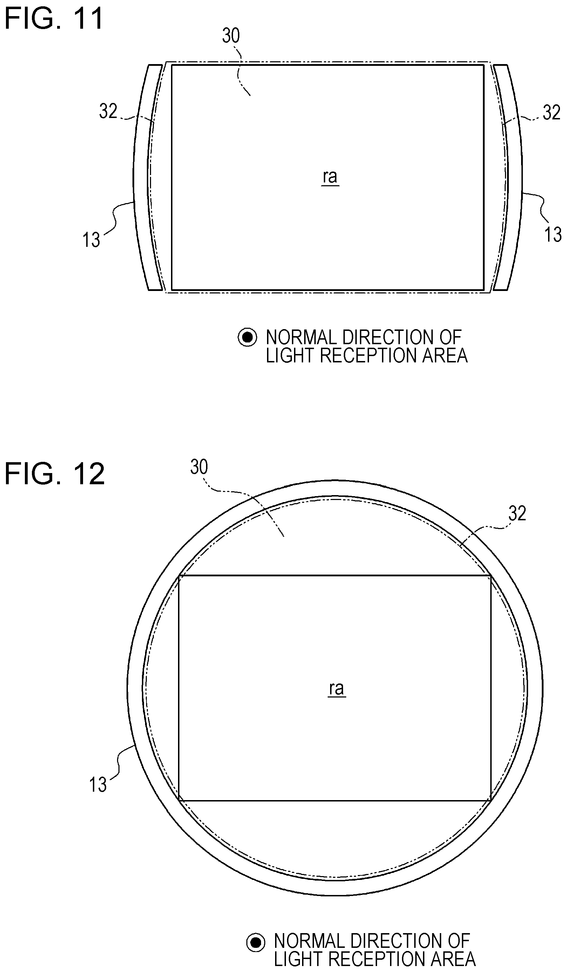

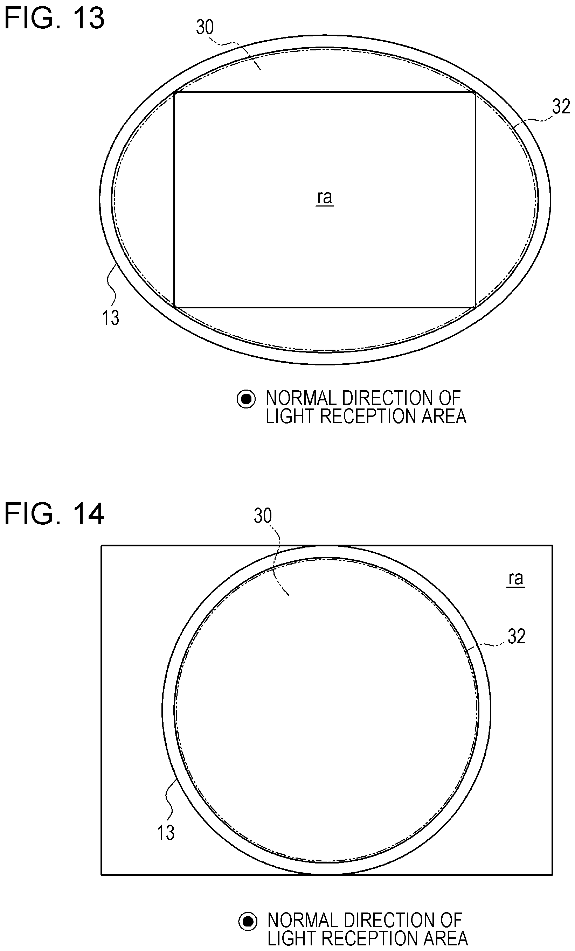

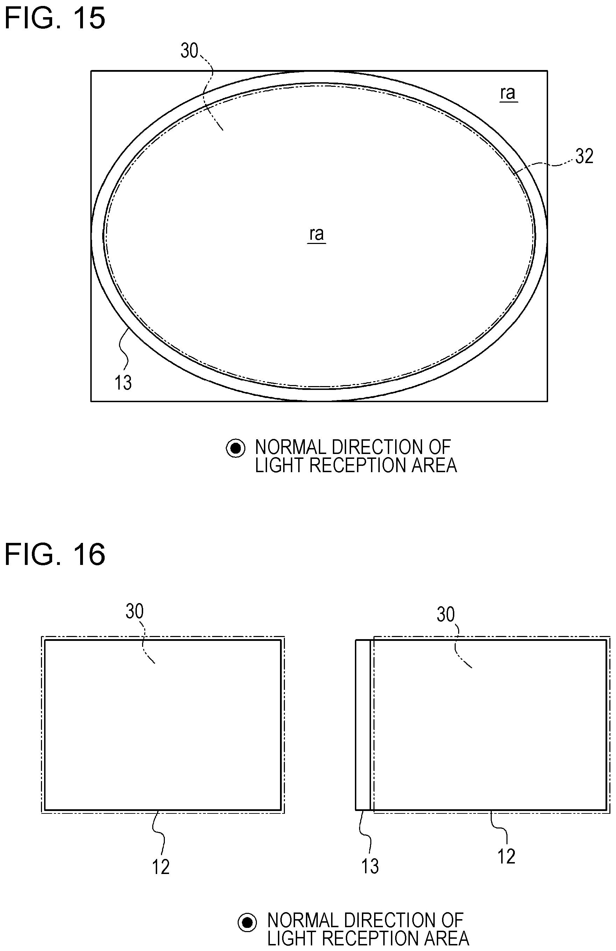

Although the optical elements 13 are mirrors each including a surface parallel to a direction perpendicular to the optical axis ox in the above description, the optical elements 13 may be mirrors including curved surfaces as viewed from the optical axis ox. For example, as illustrated in FIG. 11, the optical elements 13 may be a set of curved mirrors located at a set of opposed sides of a rectangular light reception area ra as viewed in the normal direction of the light reception area ra. The curved mirrors mentioned above may be parallel to the normal direction of the light reception area ra. Alternatively, as illustrated in FIG. 12, an optical device may include an optical element 13 composed of a mirror including a circularly curved surface surrounding a rectangular light reception area ra as viewed in the normal direction of the light reception area ra. Alternatively, as illustrated in FIG. 13, the optical element 13 may be a mirror including an elliptically curved surface surrounding a rectangular light reception area ra as viewed in the normal direction of the light reception area ra. The mirror including an elliptically curved surface is preferable in the configuration in which the light reception area ra has a rectangle shape excluding a square. Alternatively, as illustrated in FIG. 14, the optical element 13 may be a mirror that includes a circularly curved surface located within a rectangular light reception area ra as viewed in the normal direction of the light reception area ra. Alternatively, as illustrated in FIG. 15, the optical element 13 may be a mirror including an elliptically curved surface located within a rectangular light reception area ra as viewed in the normal direction of the light reception area ra. The configuration in which the optical element 13 is a mirror including a curved surface located within a rectangular light reception area ra can eliminate a gap between the light reception area ra and the mirror as viewed in the normal direction of the light reception area ra. Such a configuration eliminates a gap and thus can improve the continuity of optical information in a superimposed image described later, compared with a configuration with a gap. Also when a mirror has a surface having a curved line, the prism 30 may be located along the reflection surface of the mirror or may be located in contact with the reflection surface of the mirror. The outer shape of the prism 30 may have a shape adapted to the shape of the reflection surface of the mirror.

The imaging element 12 captures an image formed within the light reception area ra. The imaging element 12 may be located in the imaging device 10 such that the specified area pa of the optical device 21 overlaps the light reception area ra. Hence, the light reception area ra of the imaging element 12 may match the direct field angle. The direct field angle may be the field angle that matches the range of the object points the images of which are formed within the light reception area ra without the intervention of the optical elements 13. At least part of the light flux of the first light incident on the imaging optical system 11 from the direct field angle of the imaging optical system 11 may focus and form images in the light reception area ra. In addition, at least part of the light flux of the second light incident on the imaging optical system 11 from the outside of the direct field angle of the imaging optical system 11 and traveling by way of the optical elements 13 may focus and form images in the light reception area ra.

The imaging element 12 may be capable of capturing images of visible light and invisible light such as infrared rays and ultraviolet rays. The imaging element 12 is, for example, a charge coupled device (CCD) image sensor, a complementary metal-oxide-semiconductor (CMOS) image sensor, or the like. The imaging element 12 may be a color image sensor. In other words, the plurality of pixels arranged in the light reception area ra of the imaging element 12 may be covered with, for example, RGB (red, green, and blue) color filters such that these filters are distributed uniformly in the light reception area ra. The light reception area ra of the imaging element 12 may be covered with a cover. The cover may be a transparent member composed of glass, a resin, or the like. The imaging element 12 generates image signals corresponding to images received by image capturing. The imaging element 12 may generate image signals at a specified frame rate such as 30 frames per second (fps).

In the imaging element 12, the outer edges of the light reception area ra on the sides where the optical elements 13 are located may be located outside the outer edge of the exit pupil of the imaging optical system 11. The expression "outside the outer edge of the exit pupil" denotes "outside with respect to the optical axis ox of the imaging optical system 11". As described earlier, the light reception area ra may be rectangular.

The imaging device 10 may include a plurality of imaging elements 12. In a configuration with a plurality of imaging elements 12, an optical element 13 may be located between two imaging elements 12 adjacent to each other, as illustrated in FIG. 16. With the optical element 13 provided between the two imaging elements 12 adjacent to each other, images of subject light or subject light flux that would be focused in the gap between the light reception areas ra of the two adjacent imaging elements 12 in a configuration without the optical elements 13 can be captured by at least one of the imaging elements 12. A prism 30 may be located on the imaging element 12 with the optical element 13 provided on it so as to be along the reflection surface of the mirror or in contact with the reflection surface of the mirror. A prism 30 may also be located on the imaging element 12 without an optical element 13. A prism 30 may be located so as to extend over the imaging element 12 with the optical element 13 provided on it and the imaging element 12 without an optical element 13.

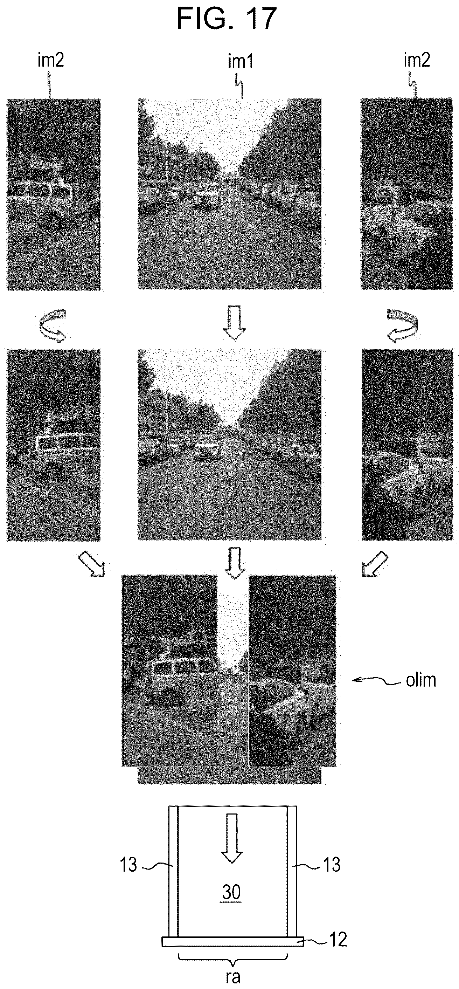

With the configurations described above, as illustrated in FIG. 17, the first image components im1 and the second image components im2 inverted by the mirrors composing the optical elements 13 are superimposed in the light reception area ra. Thus, the imaging element 12 captures a superimposed image olim including the first image components im1 and the second image components im2 inverted by the mirrors composing the optical elements 13.

The controller 14 includes at least one processor, at least one dedicated circuit, or a combination of these. The processor is a general purpose processor such as a central processing unit (CPU) or a graphics processing unit (GPU) or a dedicated processor specialized for a specific process. The dedicated circuit may be, for example, a field-programmable gate array (FPGA), an application specific integrated circuit (ASIC), or the like. The controller 14 may perform image processing on the image signals obtained from the imaging element 12.

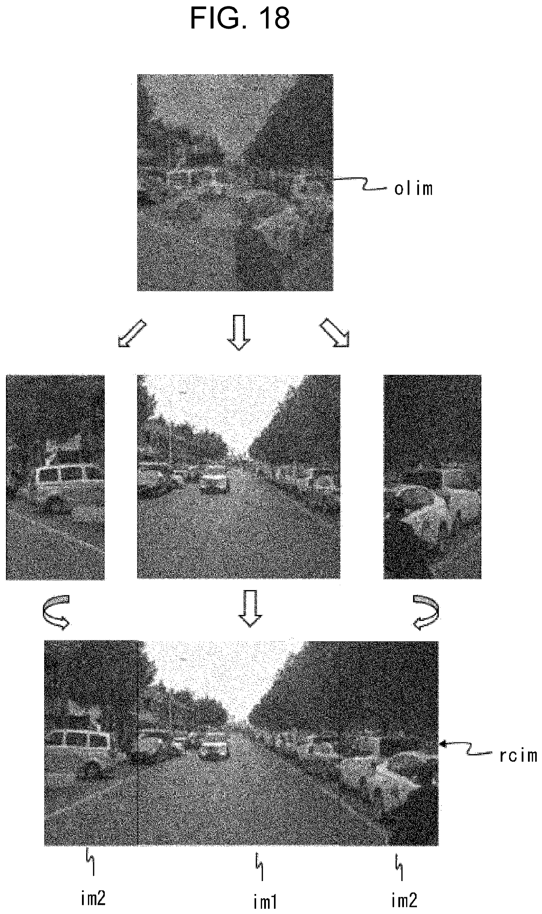

As illustrated in FIG. 18, the controller 14 may perform image processing to separate the superimposed image olim corresponding to the image signal into the first image components im1 and the second image components im2. The controller 14 applies, for example, an image processing method such as an independent component analysis, a wavelet method, or an image separation model to separate the superimposed image olim. The image separation model is, for example, a model built in advance by creating superimposed images on which multiple images are superimposed and causing the model to learn that the multiple images are the correct answer for each superimposed image. The image separation model may be a model employing pix-to-pix that causes a generator configured to generate images as with an encoder-decoder model and a discriminator configured to determine whether a generated image is a false image to compete against each other and that generates paired images reflecting the relationship. The controller 14 may combine the first image components im1 and the second image components im2 obtained by the separation to generate a restored image rcim.

The controller 14 may use the restored image rcim to measure the distance to a subject captured around the imaging device 10. The controller 14 uses the restored image rcim to perform distance measurement, for example, in accordance with depth-from-defocus (DFD). The controller 14 may perform distance measurement by using the restored image rcim in accordance with a motion parallax method (SLAM: simultaneous localization and mapping, motion stereo), a separation model based on deep learning, a foot-distance measurement method, or the like. In the foot-distance measurement method, three-dimensional coordinates are calculated by using the coordinates of images on the assumption that the lower end of a subject image is positioned on the ground surface.

The controller 14 may generate a distance image by using the distance corresponding to each address in the restored image rcim. In the distance image, the pixel value of each pixel corresponds to the distance. The controller 14 may send the distance image to external equipment.

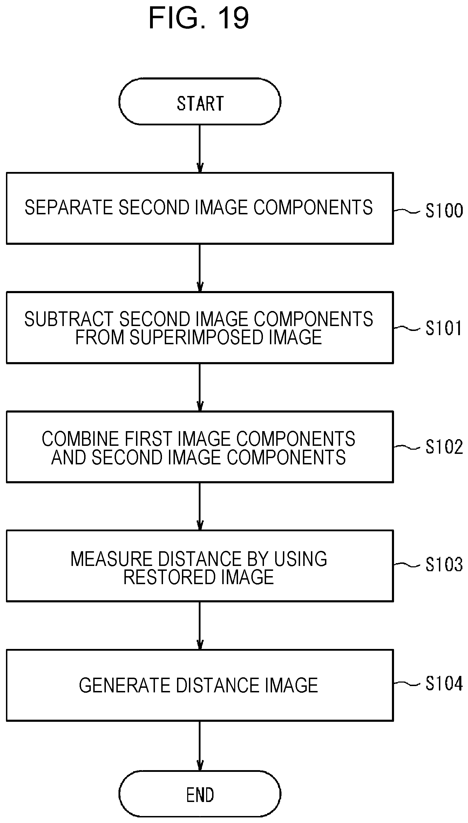

Distance-measurement processing executed by the controller 14 in the present embodiment will be described below with reference to the flowchart in FIG. 19. The distance-measurement processing starts every time the controller 14 obtains an image signal from the imaging element 12.

In step S100, the controller 14 separates second image components im2 from the superimposed image olim corresponding to the obtained image signal. After the separation, the process proceeds to step S101.

In step S101, the controller 14 subtracts the second image components im2 separated in step S100 from the superimposed image olim to generate the first image components im1. After generating the first image components im1, the process proceeds to step S102.

In step S102, the controller 14 combines the second image components im2 separated in step S100 with the first image components im1 generated in step S101 to generate a restored image rcim. After generating the restored image rcim, the process proceeds to step S103.

In step S103, the controller 14 uses the restored image rcim generated in step S102 to measure the distance of each subject captured in the restored image rcim. After the distance measurement, the process proceeds to step S104.

In step S104, the controller 14 generates a distance image in accordance with each distance calculated in step S103 and the position corresponding the distance in the restored image rcim. The controller 14 sends the distance image to external equipment. After generating the distance image, the distance-measurement processing ends.

The optical device 21 of the first embodiment with the configuration as described above includes the imaging optical system 11 configured to focus incident first light and form an image in the specified area pa and the optical elements 13 configured to guide second light to the specified area pa, the second light having a principal ray that is incident on the imaging optical system 11 the angle between which and the optical axis ox of the imaging optical system 11 differs from that of the first light. With the configuration mentioned above, although the optical device 21 employs an imaging optical system 11 with a relatively long focal length, the optical device 21 is capable of guiding, to the specified area ra, an image containing optical information in an angle range wider than the field angle corresponding to the focal length. Thus, the optical device 21 is capable of generating enlarged optical information in a wide range.

In the imaging device 10 of the first embodiment, the optical elements 13 are mirrors configured to reflect the second light and guide it to the specified area pa, and the reflection surface of each mirror is parallel to the optical axis ox and one side of the rectangular light reception area ra of the imaging element 12. In the imaging device 10 with this configuration, the number of directions in which the image reaching the light reception area ra by way of the mirrors is distorted is smaller than or equal to one. Thus, the load of image processing to remove the distortion in the light components reflected by the mirrors, included in the captured image can be low in the imaging device 10, so that the imaging device 10 can provide an improved reproducibility of the reflected light components.

The imaging device 10 of the first embodiment includes the prism 30. The second surfaces 32 of the prism 30 are in contact with the reflection surfaces of the optical elements 13 or are integrated with the reflection surfaces of the optical elements 13. The configuration mentioned above makes it unlikely for the reflection surfaces of the optical elements 13 to be shifted relative to the imaging optical system 11. In other words, the positions of the optical elements 13 are stable. This reduces the effects of the positional deviation of the optical elements 13 due to vibration, shocks, or the like.

In the imaging device 10 of the first embodiment, the mirrors include a plurality of plane mirrors, and at least one set of two plane mirrors out of the plurality of plane mirrors is located such that their reflection surfaces are parallel to each other. This configuration enables the imaging device 10 to obtain optical information wider than the direct field angle on both sides with the optical axis ox as the center.

In the imaging device 10 of the first embodiment, the distance H between the optical axis ox and each of the reflection surfaces of the two plane mirrors parallel to each other is equal, and the angle CRA of the principal ray of the light flux from an object point pp at the angle twice the direct field angle satisfies CRA ≤ tan⁻¹(H/B). The imaging device 10 with this configuration can avoid such a situation that the reflected light components from one plane mirror and the reflected light components from the other plane mirror are superimposed and thus the image components of the three layers are superimposed. This can improve the accuracy of separating image components in succeeding image processing.

In the imaging device 10 of the first embodiment, each plane mirror is in close contact with an outer edge of the light reception area ra of the imaging element 12 in the normal direction of the plane mirror. In this normal direction, if a gap is present between the plane mirror and the light reception area ra of the imaging element 12, the optical information on the subject forming an image in this gap would be lost. Considering such a situation, the imaging device 10 is configured as described above so as to avoid loss of optical information.

In the imaging device 10 of the first embodiment, each mirror is located outside the exit pupil of the imaging optical system 11 as viewed in the direction of the optical axis ox. This configuration enables the imaging device 10 to cause light or light flux passing near end portions of the exit pupil to be incident on the mirrors. Thus, the imaging device 10 is capable of mitigating the decrease in the amount of light due to mechanical vignetting of part of light or light flux passing near the exit pupil.

In the imaging device 10 of the first embodiment, the angle of the principal ray of any light flux in the imaging optical system 11 with respect to the optical axis ox is larger than 0°. With the configuration described above, since the imaging optical system 11 is not image-space telecentric in the imaging device 10, light or light flux from object points at angles wider than the direct field angle can be incident on the optical elements 13. Thus, the imaging device 10 is capable of reliably generating optical information in a range wider than the direct field angle.

The imaging device 10 of the first embodiment includes the controller 14 configured to separate the image corresponding to the image signal into the first image components im1 associated with the first light and the second image components im2 associated with the second light. With this configuration, the imaging device 10 is capable of generating an image obtained by canceling the superimposition of the superimposed image olim on which multiple kinds of image components are superimposed.

An imaging device according to a second embodiment of the present disclosure will be described below. The second embodiment differs from the first embodiment in that two imaging optical systems 11 are provided for one imaging element 12. The second embodiment will be described below with a focus on differences from the first embodiment. Note that the portions having the same configurations as in the first embodiment are denoted by the same symbols.

In the imaging device according to the second embodiment, a disparity image of a target object is formed by using each of the two imaging optical systems 11, and the imaging element 12 captures the disparity image to generate a disparity-based image of the target object. The disparity-based image of the target object is used to calculate the distance to the object points of the target object.

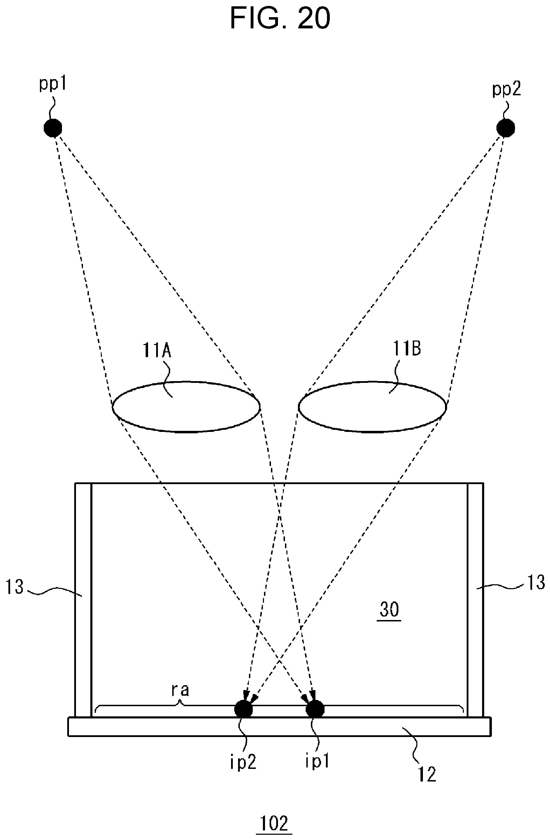

As illustrated in FIG. 20, in the second embodiment, an imaging device 102 includes a first imaging optical system 11A and a second imaging optical system 11B as imaging optical systems 11. The first imaging optical system 11A is also referred to as the first optical system. The second imaging optical system 11B is also referred to as the second optical system. The first optical system and the second optical system may be located side by side. The imaging device 102 further includes a prism 30 and optical elements 13. The prism 30 may have a configuration the same as or similar to that of the prism 30 in the imaging device 10 according to the first embodiment. Each optical element 13 may have a configuration the same as or similar to that of each optical element 13 in the imaging device 10 according to the first embodiment.

Each of the first imaging optical system 11A and the second imaging optical system 11B focuses light or light flux incoming from object points and forms images in the light reception area ra of the imaging element 12. Here, assume that the imaging device 102 captures an image of a target object having object points pp1 and pp2 at its two ends. In this case, the first imaging optical system 11A forms an image of the object point pp1 at an image point ip1 on the light reception area ra and forms images of other portions of the target object in an area to the left of the image point ip1. The second imaging optical system 11B forms an image of the object point pp2 at an image point ip2 on the light reception area ra and forms images of other portions of the target object in an area to the right of the image point ip2. Thus, the image of the target object formed by the first imaging optical system 11A and the image of the target object formed by the second imaging optical system 11B overlap each other in a center area of the light reception area ra.

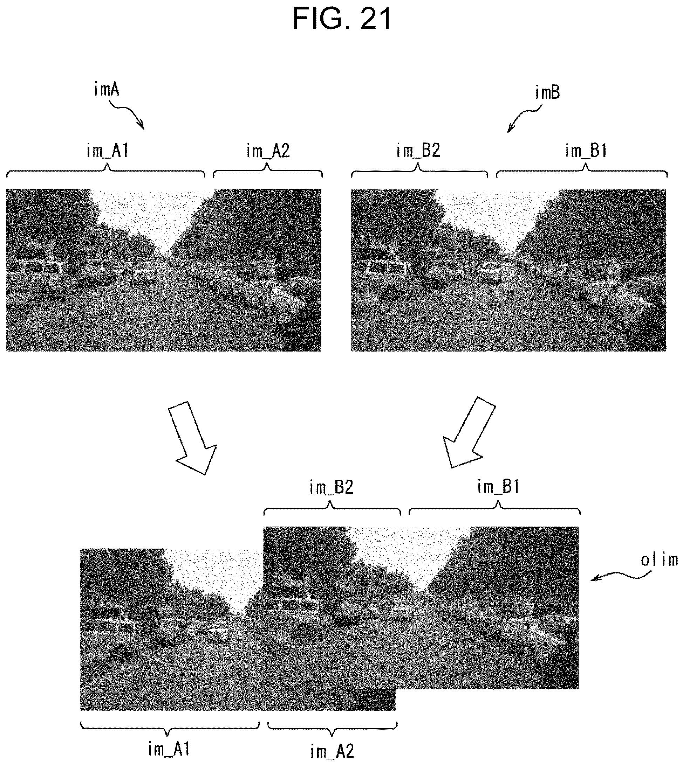

As illustrated in FIG. 21, the image of the target object formed by the first imaging optical system 11A is indicated as a first image imA. The image of the target object formed by the second imaging optical system 11B is indicated as a second image imB. The first image imA includes a first non-superimposed image im_A1 that is not superimposed on the second image imB on the light reception area ra and a first superimposed image im_A2 that is superimposed on the second image imB on the light reception area ra. The second image imB includes a second non-superimposed image im_B1 that is not superimposed on the first image imA on the light reception area ra and a second superimposed image im_B2 that is superimposed on the first image imA on the light reception area ra.

The imaging element 12 captures an image including the first non-superimposed image im_A1, the second non-superimposed image im_B1, and an image in which the first superimposed image im_A2 and second superimposed image im_B2 are superimposed, and generates a superimposed image olim.

The imaging device 102 may further include a controller 14. The controller 14 may generate the first image imA and the second image imB from the superimposed image olim by separating the image in which the first superimposed image im_A2 and second superimposed image im_B2 are superimposed, from the superimposed image olim.

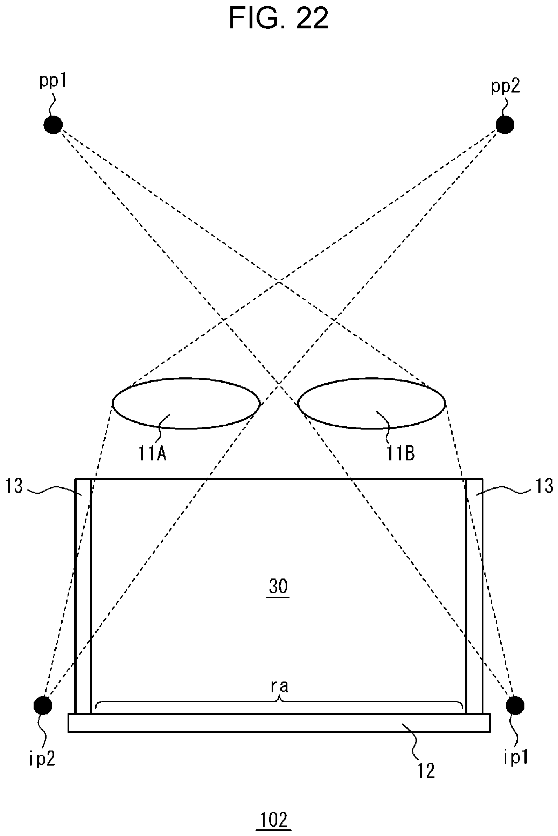

As illustrated in FIG. 22, the image point ip2 at which the first imaging optical system 11A forms an image of the object point pp2 can be positioned outside the light reception area ra. In other words, the object point pp2 can be positioned outside the direct field angle of the first imaging optical system 11A. Also in this case, the light or the light flux to focus at the image point ip2 is reflected on an optical element 13 to the inside of the light reception area ra and forms a superimposed image on the light reception area ra. Hence, the superimposed image olim includes an image including the images of the object points within the direct field angle and the images of object points outside the direct field angle, which are superimposed in the first image imA. The image point ip1 at which the second imaging optical system 11B forms an image of the object point pp1 can be positioned outside the light reception area ra. In other words, the object point pp1 can be positioned outside the direct field angle of the second imaging optical system 11B. Also in this case, the light or the light flux to focus at the image point ip1 is reflected on an optical element 13 to the inside of the light reception area ra and forms a superimposed image on the light reception area ra. Hence, the superimposed image olim includes an image including the images of the object points within the direct field angle and the images of object points outside the direct field angle, which are superimposed in the second image imB.

The controller 14 may separate the images of the object points within the direct field angle and the images of object points outside the direct field angle in each of the first image imA and the second image imB in the superimposed image olim and generate an image expanded to the object points outside the direct field angle.

As described above, the imaging device 102 according to the second embodiment is capable of capturing an image including the first image imA and second image imB superimposed on the light reception area ra of the imaging element 12 and separating the first image imA and the second image imB from the superimposed image olim. In this way, the imaging device 102 is capable of capturing a disparity-based image composed of two images with only one imaging element 12.

The imaging device 102 performs image capturing such that the two images composing a disparity-based image are superimposed, so that a disparity-based image having a wider field angle can be captured than when the light reception area ra is simply divided into two areas and a disparity-based image is captured by using each area. The imaging device 102 also includes the optical elements 13 configured to focus at least part of light or light flux incident on the imaging optical system 11 from the outside of the direct field angle of the imaging optical system 11 corresponding to the light reception area ra of the imaging element 12 and form images in the light reception area ra. With the configuration mentioned above, although the imaging device 10 employs imaging optical systems 11 with a relatively long focal length, the imaging device 10 is capable of forming an image including optical information in a wider range than the field angle corresponding to the focal length. Thus, the imaging device 10 is capable of generating enlarged optical information in a wide range.

In the distance measurement based on a disparity-based image, the longer the baseline length, the higher the resolution and accuracy of the distance data. The baseline length corresponds to the distance of devices that capture two images composing a disparity-based image. Examples of methods of capturing a disparity-based image for generating distance measurement data include methods according to the following comparative examples.

A method in which a stereo camera is used can be considered as a first comparative example. The stereo camera employs a method of performing triangulation with two cameras arranged in parallel. In a stereo camera, the distance between the two cameras corresponds to the baseline length. Hence, the resolution and accuracy of distance data can be increased by increasing the baseline length of the stereo camera. In addition, an image with a wider angle can be captured by setting the focal length of each of the two cameras. However, increasing the baseline length of a stereo camera requires increasing the distance between the two cameras, which enlarges the device. In addition, calibration of the two cameras is required.

A pupil division method can be considered as a second comparative example. The pupil division method is a method in which the pupil of a camera is divided and a stereo camera is formed in the lens. The size of a device according to the pupil division method can be smaller than a stereo camera because it requires only one pupil. However, the baseline length is limited by the diameter of the pupil. Hence, it is difficult to achieve a long baseline length. This makes it difficult to increase the resolution and accuracy of distance data. In the pupil division method, increasing the focal length can be considered to increase the resolution and accuracy of distance data. However, increasing the focal length makes it difficult to increase the field angle of the captured image. Specifically, since the baseline length is limited, this makes it difficult either to increase the field angle of the captured image or to improve the resolution and accuracy of distance data.

A method in which the inputs of two pupil are combined and one imaging element is used to perform image capturing can be considered as a third comparative example. In a device according to this method, the baseline length can be increased, and the field angle of the captured image can be increased, as in a stereo camera. In addition, the number of imaging elements can be smaller than in a stereo camera. However, the configuration for combining the inputs of two pupils requires a special optical design for the optical system. In addition, the part count of the optical system will increase. This in turn increases the costs to achieve a small size.

In contrast, the imaging device 102 according to the second embodiment, in which two images can be captured by one imaging element 12, makes it possible to achieve a wide field angle of the captured image and a smaller size than the stereo camera according to the first comparative example. In addition, since the imaging device 102 according to the second embodiment includes the first imaging optical system 11A and the second imaging optical system 11B for the one imaging element 12, the baseline length can be longer than that of the pupil division method according to the second comparative example, and hence the resolution and accuracy of distance data can be increased. In addition, in the imaging device 102 according to the second embodiment, the superimposed image obtained by capturing superimposed images formed in the light reception area ra of the imaging element 12 can be separated into images each corresponding to one of the superimposed images, and thus the configuration can be simpler and smaller than in the method according to the third comparative example.

As described above, the imaging device 102 according to the second embodiment can achieve a configuration simpler and smaller than those of the comparative examples mentioned above and can achieve a wider field angle of the captured image and higher resolution and accuracy of distance data.

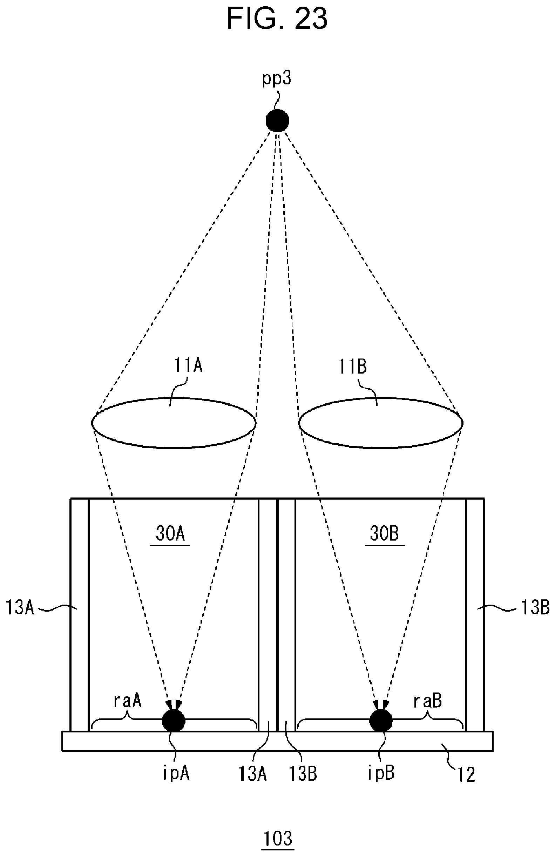

As illustrated in FIG. 23, an imaging device 103 according to a third embodiment includes a first prism 30A associated with a first imaging optical system 11A and a second prism 30B associated with a second imaging optical system 11B. The imaging device 103 includes first optical elements 13A located on side surfaces of the first prism 30A and second optical elements 13B located on side surfaces of the second prism 30B. In the imaging device 103, the light reception area ra of the imaging element 12 is divided into a first light reception area raA where the first prism 30A is located and a second light reception area raB where which the second prism 30B is located.

The first imaging optical system 11A focuses light or light flux incoming from an object point pp3 and forms an image at a first image point ipA on the first light reception area raA. The first imaging optical system 11A can focus light or light flux incoming from other object points and form images outside the first light reception area raA. Light or light flux that focuses and forms images outside the first light reception area raA is reflected on the first optical elements 13A and focuses and forms images at points on the first light reception area raA. In other words, the combination of the first imaging optical system 11A, the first prism 30A, and the first optical elements 13A is capable of forming images of a target object on the first light reception area raA, including images of object points outside the direct field angle of the first imaging optical system 11A.

The second imaging optical system 11B focuses light or light flux incoming from the object point pp3 and forms an image at a second image point ipB on the second light reception area raB. The second imaging optical system 11B can focus light or light flux incoming from other object points and form images outside the second light reception area raB. Light or light flux that focuses and forms images outside the second light reception area raB is reflected on the second optical elements 13B and focuses and forms images at points on the second light reception area raB. In other words, the combination of the second imaging optical system 11B, the second prism 30B, and the second optical elements 13B is capable of forming images of a target object on the second light reception area raB, including images of object points outside the direct field angle of the second imaging optical system 11B.

The imaging device 103 according to the third embodiment includes two sets of the combination of one imaging optical system 11, one prism 30, and optical elements 13 located on side surfaces of the prism 30. Since the imaging device 103 includes a combination of two sets of the same configuration as described above, one set of the configuration can be used in common, and this can in turn reduce the manufacturing time and costs.

In the imaging device 103 according to the third embodiment, the imaging element 12 separately captures the image formed by the first imaging optical system 11A and the image formed by the second imaging optical system 11B. In this case, the superimposed image olim includes an image including the images of the object points within the direct field angle and the images of object points outside the direct field angle which are superimposed in only each of the first image imA and the second image imB. Hence, the techniques such as the image separation model that are used to separate superimposed images from the superimposed image olim in the imaging device 10 according to the first embodiment can be used as they are.

In the imaging device 103 according to the third embodiment, the first optical elements 13A can be formed as reflective films on side surfaces of the first prism 30A, and the second optical elements 13B can be formed as reflective films on side surfaces of the second prism 30B. In this case, the area occupied by the first optical elements 13A and the second optical elements 13B are small in the light reception area ra of the imaging element 12. Specifically, the area of the regions that do not belong to either the first light reception area raA or the second light reception area raB and cannot receive light is small. Conversely, the area of images captured in the light reception area ra can be increased. Hence, the field angle of the imaging device 103 can be increased.

An imaging device according to a fourth embodiment of the present disclosure will be described below. The fourth embodiment differs from the first embodiment in the configuration of the optical elements and the separation processing performed by the controller. The fourth embodiment will be described below with a focus on differences from the first embodiment. Note that the portions having the same configurations as in the first embodiment are denoted by the same symbols.

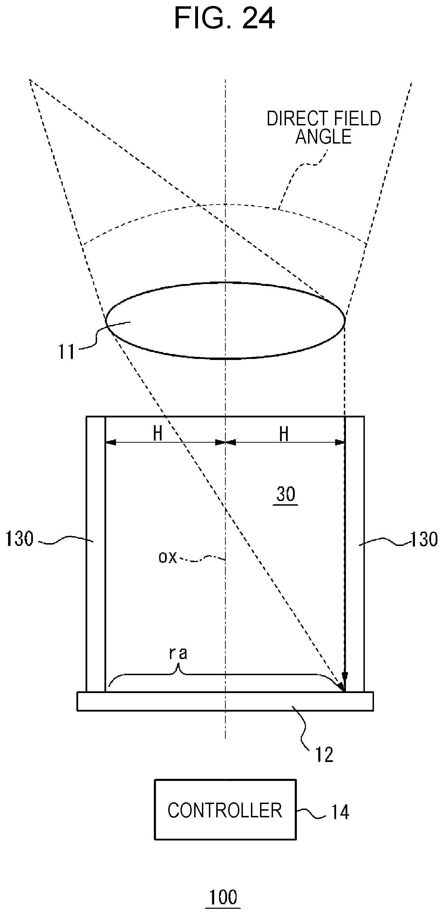

As illustrated in FIG. 24, an imaging device 100 according to the fourth embodiment, similar to the first embodiment, includes an imaging optical system 11, an imaging element 12, a prism 30, and optical elements 130. The imaging device 100 may further include a controller 14. The structures and functions of the imaging optical system 11 and the imaging element 12 in the fourth embodiment are the same as those in the first embodiment. The structure of the controller 14 in the fourth embodiment is the same as that in the first embodiment.

In the fourth embodiment, the optical elements 130 focuses at least part of light or light flux incident on the imaging optical system 11 from the outside of the direct field angle of the imaging optical system 11 and forms images in the light reception area ra of the imaging element 12, in a similar way to the first embodiment. In the fourth embodiment, unlike the first embodiment, the optical elements 130 optically process the incident light or light flux and output the resultant light or light flux.

The optical processing is, for example, changing the bandwidth of the incident light or light flux. Specifically, the optical elements 130 attenuate the light in the bandwidth corresponding to one of multiple color filters covering the imaging element 12, in the incident light or light flux. Thus, the optical elements 130 cause the light in the bandwidth excluding the light in the bandwidth mentioned above to focus and form images on the light reception area ra.

The optical elements 130 may be mirrors configured to reflect light in a bandwidth different from the bandwidth of the color to be attenuated. The optical elements 130, for example, attenuate R light and reflect GB light.

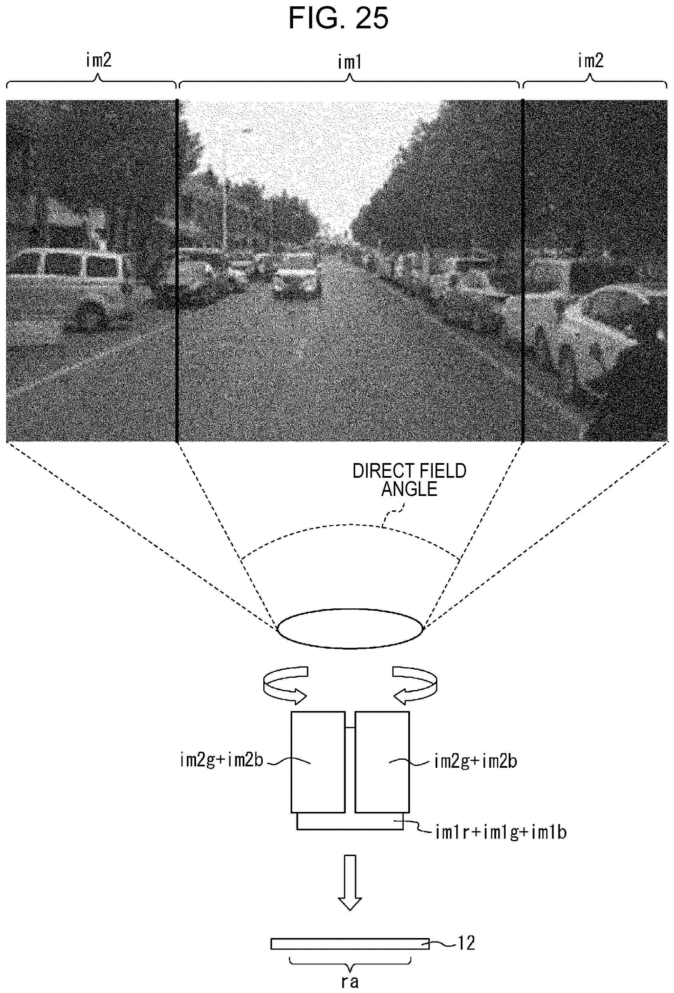

In the fourth embodiment with the configuration described above, as illustrated in FIG. 25, first R image components im1r, first G image components im1g, and first B image components im1b associated with the object points within the direct field angle and corresponding to the colors of all the color filters reach the light reception area ra without the intervention of the optical elements 130. In addition, second G image components im2g and second B image components im2b associated with object points outside the direct field angle and corresponding to the colors other than the attenuated color components reach the light reception area ra by way of the optical elements 130.

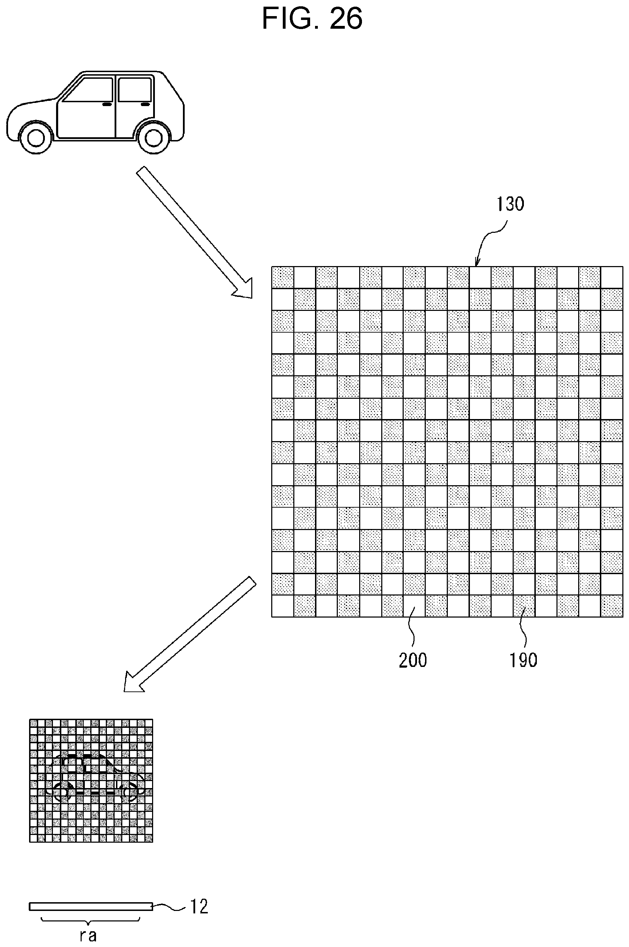

Alternatively, the optical processing is, for example, adding a brightness difference pattern according to the incident positions of the incident light or light flux. Specifically, as illustrated in FIG. 26, an optical element 130 has a surface on which first areas 190 and second areas 200 are distributed, for example, in a checkered pattern. The first areas 190 attenuate the luminance of incident light at a first attenuation ratio and emit the resultant light. The first attenuation ratio is more than 0% and less than 100%. The second areas 200 attenuate the luminance of incident light at a second attenuation ratio and emit the resultant light. The second attenuation ratio is 0% or more and less than the first attenuation ratio. Thus, the optical elements 130 add the brightness difference according to the pattern of the first areas 190 and the second areas 200 to the incident light or light flux and cause the resultant light or light flux to focus and form images in the light reception area ra.

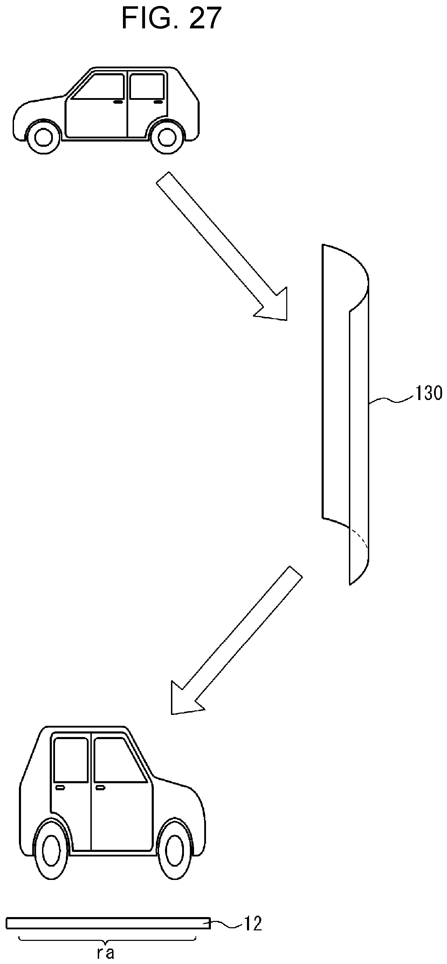

Alternatively, the optical processing is, for example, adding distortion to the image to be formed by the incident light or light flux in the light reception area ra. Specifically, as illustrated in FIG. 27, an optical element 130 is a mirror including a cylindrically curved surface the axis of which is parallel to the optical axis and reflects the incident light or light flux to form an image to which distortion is added, in the light reception area ra. More specifically, the optical element 130 forms an image distorted so as to be enlarged in the direction of the line connecting both ends of the circular arc of the cross section of the optical element which is a mirror including a plane perpendicular to the optical axis.

In the fourth embodiment, the controller 14 may perform image processing to separate the superimposed image olim corresponding to the image signal into first image components im1 and second image components im2, in a similar way to the first embodiment. In the fourth embodiment, the controller 14 separates the superimposed image olim by an image processing method using an image separation model.

The image separation model in in the fourth embodiment will be described below. The image separation model is a model built in advance by generating a first image not subjected to optical processing; performing image processing, corresponding to the optical processing performed by the optical element 130, on a second image different from the first image; superimposing the resultant second image on the first image to generate a superimposed image; and causing the model to learn that the first image and the second image are the correct answer for the superimposed image.

In a configuration in which the optical processing is changing the bandwidth, a first image is the RGB image components of a certain image. In this configuration, a second image is the GB image components of an image different from the certain image. In a configuration in which the optical processing is changing the bandwidth, the R image components of the certain image may be added to the superimposed image and used for training.

In a configuration in which the optical processing is adding a brightness difference pattern, a first image is a certain image. In this configuration, a second image is an image obtained by changing the luminance of an image different from the certain image with the brightness difference pattern of the optical element 130.

In a configuration in which the optical processing is adding distortion, a first image is a certain image. In this configuration, a second image is an image obtained by causing an image different from the certain image to be reflected on a mirror including the same curved surface as that of the optical element 130.

In the fourth embodiment, the controller 14 may combine the first image components im1 and the second image components im2 obtained by the separation to generate a restored image rcim, in the same way as in the first embodiment. In the fourth embodiment, the controller 14 may use the restored image rcim to measure the distance of a subject captured around the imaging device 100, in the same way as in the first embodiment. In the fourth embodiment, the controller 14 may generate a distance image in accordance with the distance corresponding to each address in the restored image rcim and send it to external equipment, in the same way as in the first embodiment.

An optical device 210 of the fourth embodiment with the configuration as described above also includes the imaging optical system 11 configured to focus incident first light and form an image in the specified area pa and the optical elements 130 configured to guide second light to the specified area pa, the second light having a principal ray that is incident on the imaging optical system 11 and the angle between which and the optical axis ox of the imaging optical system 11 differs from that of the first light. Hence, the imaging device 100 is also capable of generating enlarged optical information in a wide range.

Also in the imaging device 100 of the fourth embodiment, the optical elements 130 are mirrors configured to reflect the second light and form images on the specified area pa, and the reflection surface of each mirror is parallel to the optical axis ox and one side of the rectangular light reception area ra of the imaging element 12. Thus, the load of image processing to remove the distortion in the light components reflected by the mirrors, included in the captured image can be low also in the imaging device 100, so that the imaging device 100 can provide an improved reproducibility of the reflected light components.

Also in the imaging device 100 of the fourth embodiment, the mirrors include a plurality of plane mirrors, and at least one set of two plane mirrors out of the plurality of plane mirrors is located such that their reflection surfaces are parallel to each other. Hence, the imaging device 100 also is capable of obtaining optical information wider than the direct field angle on both sides with the optical axis ox as the center.

Also in the imaging device 100 of the fourth embodiment, the distance H between the optical axis ox and each of the reflection surfaces of the two plane mirrors parallel to each other is equal, and the angle CRA of the principal ray of the light flux from an object point pp at the angle twice the direct field angle satisfies CRA ≤ tan⁻¹(H/B). Hence, the imaging device 100 also can avoid such a situation that the reflected light components from one plane mirror and the reflected light components from the other plane mirror are superimposed and thus the image components of the three layers are superimposed. This can improve the accuracy of separating image components in succeeding image processing.

Also in the imaging device 100 of the fourth embodiment, each plane mirror is in close contact with an outer edge of the light reception area ra of the imaging element 12 in the normal direction of the plane mirror. Thus, the imaging device 100 also can avoid the loss of optical information.

Also in the imaging device 100 of the fourth embodiment, each mirror is located outside the exit pupil of the imaging optical system 11 as viewed in the direction of the optical axis ox. Thus, the imaging device 100 also is capable of mitigating the decrease in the amount of light due to mechanical vignetting of part of light or light flux passing near the exit pupil.

Also in the imaging device 100 of the fourth embodiment, the angle of the principal ray of any light flux in the imaging optical system 11 with respect to the optical axis ox is larger than 0°. Thus, the imaging device 100 also is capable of reliably generating optical information in a range wider than the direct field angle.

The imaging device 100 of the fourth embodiment also includes the controller 14 configured to separate the image corresponding to the image signal into the first image components im 1 associated with the first light and the second image components im2 associated with the second light. Thus, the imaging device 100 also is capable of generating an image obtained by canceling the superimposition of the superimposed image olim on which multiple kinds of image components are superimposed.

In the imaging device 100 of the fourth embodiment, the optical elements 130 optically process the light or light flux incident on the optical elements 130 and emit the resultant light or light flux. In the imaging device 100 with this configuration, the optical characteristics corresponding to the optical processing are added to the image components to be separated. Hence, an image separation model trained to improve the separation accuracy can be built for the imaging device 100. Thus, the imaging device 100 can improve the restoration accuracy for restored images.

An imaging device according to a fifth embodiment of the present disclosure will be described below. The fifth embodiment differs from the first embodiment in the configuration of the imaging element and the separation processing performed by the controller. The fifth embodiment will be described below with a focus on differences from the first embodiment. Note that the portions having the same configurations as in the first embodiment are denoted by the same symbols.

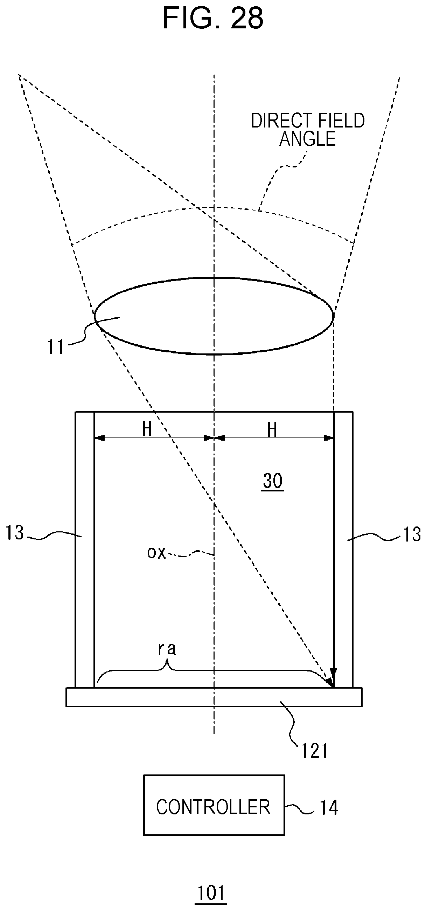

As illustrated in FIG. 28, an imaging device 101 according to the fifth embodiment, similar to the first embodiment, includes an imaging optical system 11, an imaging element 121, a prism 30, and optical elements 13. The imaging device 101 may further include a controller 14. The structures and functions of the imaging optical system 11 and the optical elements 13 in the fifth embodiment are the same as those in the first embodiment. The structure of the controller 14 in the fifth embodiment is the same as that in the first embodiment.

In the fifth embodiment, the imaging element 121 captures images formed in the light reception area ra with the intervention of the imaging optical system 11, in a similar way to the first embodiment. The imaging element 121 may be capable of capturing images of visible light and invisible light such as infrared rays and ultraviolet rays, in a similar way to the first embodiment. The imaging element 121 may be a color image sensor. The imaging element 121 generates image signals corresponding to the images received by image capturing, in a similar way to the first embodiment. The imaging element 121 may generate image signals at a specified frame rate such as 30 fps in a similar way to the first embodiment. In the imaging element 121, the outer edges of the light reception area ra on the sides where the optical elements 13 are located may be located outside the outer edge of the exit pupil of the imaging optical system 11, in the same manner as in the first embodiment. The light reception area ra may be rectangular, in the same manner as in the first embodiment.

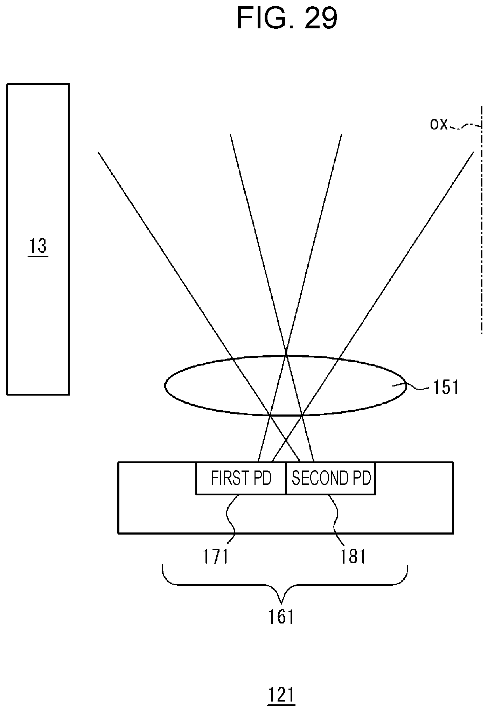

In the fifth embodiment, unlike the first embodiment, the imaging element 121 may be a dual pixel image sensor. As illustrated in FIG. 29, the imaging element 121, which is a dual pixel image sensor, has a structure in which a pixel 161 covered with each micro lens 151 includes a first PD (photodiode) 171 and a second PD 181, and light or light flux can be incident on only one of the PDs depending on the incident direction of the light or light flux. For example, in each pixel 161, only the light or light flux from the direction inclined to the optical axis ox can be incident on the first PD 171, and only the light or light flux from the direction inclined to an optical element 13 can be incident on the second PD 181.

With the configuration described above, the first image components im1 associated with the first light reach the first PDs 171 in the light reception area ra without the intervention of the optical elements 13. The second image components im2 associated with the second light reach the second PDs 181 in the light reception area ra, being inverted by the intervention of the optical elements 13.

In the fifth embodiment, the controller 14 may perform image processing to separate the superimposed image olim corresponding to the image signal into first image components im1 and second image components im2, in a similar way to the first embodiment. In the fifth embodiment, the controller 14 may generate the first image components im1 by using only the signals generated by the first PDs 171. The expression "by using only the signals generated by the first PDs 171" specifies that the signals generated by the second PDs 181 are not used. For example, the expression may include using signals not related to the signals output by the second PDs 181, for example, a synchronization signal and the like. In the fifth embodiment, the controller 14 may generate inverted second image components im2 by using only the signals generated by the second PDs 181. The expression "by using only the signals generated by the second PDs 181" has a meaning similar to the expression "by using only the signals generated by the first PDs 171".

In the fifth embodiment, the controller 14 may combine the first image components im1 and the second image components im2 obtained by the separation to generate a restored image rcim, in the same way as in the first embodiment. In the fifth embodiment, the controller 14 may use the restored image rcim to measure the distance of a subject captured around the imaging device 101, in the same way as in the first embodiment. In the fifth embodiment, the controller 14 may generate a distance image in accordance with the distance corresponding to each address in the restored image rcim and send it to external equipment, in the same way as in the first embodiment.

Also in the imaging device 101 according to the fifth embodiment with the configuration as described above, the optical elements 13 are mirrors configured to reflect the second light and guide it to the specified area pa, and the reflection surface of each mirror is parallel to the optical axis ox and one side of the rectangular light reception area ra of the imaging element 121. Thus, the load of image processing to remove the distortion in the light components reflected by the mirrors, included in the captured image can be low also in the imaging device 101, so that the imaging device 101 can provide an improved reproducibility of the reflected light components.

Also in the imaging device 101 of the fifth embodiment, the mirrors include a plurality of plane mirrors, and at least one set of two plane mirrors out of the plurality of plane mirrors is located such that their reflection surfaces are parallel to each other. Hence, the imaging device 101 also is capable of obtaining optical information wider than the direct field angle on both sides with respect to the optical axis ox as the center.

Also in the imaging device 101 of the fifth embodiment, the distance H between the optical axis ox and each of the reflection surfaces of the two plane mirrors parallel to each other is equal, and the angle CRA of the principal ray of the light flux from an object point pp at the angle twice the direct field angle satisfies CRA ≤ tan⁻¹(H/B). Hence, the imaging device 101 also can avoid such a situation that the reflected light components from one plane mirror and the reflected light components from the other plane mirror are superimposed and thus the image components of the three layers are superimposed. This can improve the accuracy of separating image components in succeeding image processing.

Also in the imaging device 101 of the fifth embodiment, each plane mirror is in close contact with an outer edge of the light reception area ra of the imaging element 121 in the normal direction of the plane mirror. Thus, the imaging device 101 also can avoid loss of optical information.

Also in the imaging device 101 of the fifth embodiment, each mirror is located outside the exit pupil of the imaging optical system 11 as viewed in the direction of the optical axis ox. Thus, the imaging device 101 is capable of mitigating the decrease in the amount of light due to mechanical vignetting of part of light or light flux passing near the exit pupil.

Also in the imaging device 101 of the fifth embodiment, the angle of the principal ray of any light flux in the imaging optical system 11 with respect to the optical axis ox is larger than 0°. Thus, the imaging device 101 also is capable of reliably generating optical information in a range wider than the direct field angle.

The imaging device 101 of the fifth embodiment also includes the controller 14 configured to separate the image corresponding to the image signal into the first image components im1 associated with the first light and the second image components im2 associated with the second light. Thus, the imaging device 101 also is capable of generating an image obtained by canceling the superimposition of the superimposed image olim on which multiple kinds of image components are superimposed.

The figures used for explaining the embodiments according to the present disclosure are schematic. The ratios of dimensions or the like on the drawings are not necessarily consistent with those of actual ones.

Although the drawings and the examples are used above to describe the embodiments according to the present disclosure, it is important to note that those skilled in the art can make various variations and changes on the basis of the present disclosure. Hence, it is important to note that these variations and changes will be included in the scope of the present disclosure. For example, the functions and the like included in each component or the like can be rearranged unless doing so causes a logical contradiction. Two or more components or the like can be combined into one, or a component can be divided.

All of the configuration requirements described in the present disclosure and/or all the disclosed methods or all the processing steps can be combined in any way, excluding combinations in which the features of these are mutually exclusive. Each of the features described in the present disclosure can be substituted with an alternative feature that operates for the same purpose, an equivalent purpose, or a similar purpose unless explicitly denied. Hence, unless explicitly denied, each of the disclosed features is merely an example of a comprehensive series of identical or equivalent features.

Furthermore, the embodiments according to the present disclosure are not limited to any specific configuration of the embodiments described above. The embodiments according to the present disclosure can be expanded to all the new features described in the present disclosure or the combinations of some of those, or all the described new methods, processing steps, or the combinations of some of those.

The terms "first", "second", and the like used in the present disclosure are identifiers to distinguish components. For the components distinguished by being prefixed with "first", "second", and the like in the present disclosure, the ordinal numbers of the components can be exchanged. For example, as for the first image components and the second image components, "first" and "second", which are identifiers, can be exchanged with each other. The identifiers are exchanged at the same time. Also after exchanging the identifiers, these components are distinguished. Identifiers may also be eliminated. The components without identifiers are distinguished by symbols. Only on the basis of identifiers such as "first" and "second" mentioned in the present disclosure, the order of the components cannot be interpreted, or the identifiers cannot be used as a basis for the presence of an identifier with a smaller number.

In an embodiment, (1) an optical device includes: an optical system configured to focus incident first light and form an image in a specified area; an optical element configured to guide second light to the specified area, the second light having a principal ray that is incident on the optical system and angle between which and an optical axis of the optical system differs from angle between a principal ray of the first light and the optical axis of the optical system; and a prism located in a region surrounded by the optical system, the optical element, and the specified area.
(2) In the optical device according to (1) mentioned above, the optical element may include a reflection surface configured as at least one surface of the prism.
(3) In the optical device according to (1) or (2) mentioned above, an angle between the principal ray of the second light and the optical axis may be larger than an angle between the principal ray of the first light and the optical axis.
(4) In the optical device according to any one of (1) to (3) mentioned above, the optical element may include a mirror configured to reflect the second light and guide the reflected second light to the specified area.

In an embodiment, (5) an optical device includes: an optical system configured to focus incident first light and form an image in a specified area; an optical element configured to guide second light to the specified area, the second light having a principal ray that is incident on the optical system and angle between which and an optical axis of the optical system differs from angle between a principal ray of the first light and the optical axis of the optical system; and a prism located on at least part of optical paths of the first light and the second light output from the optical system.

In an embodiment, (6) an imaging device includes: the optical device according to any one of (1) to (5) mentioned above; and an imaging element including an imaging area overlapping the specified area.
(7) In the imaging device according to (6) mentioned above, the optical system may include first and second optical systems that have different optical axes and whose subjects are partially common. Part of an image formed by the first optical system and part of an image formed by the second optical system may be superimposed in a light reception area of the imaging element.
(8) In the imaging device according to (6) mentioned above, the optical system may include first and second optical systems that have different optical axes and whose subjects are partially common. The prism may include: a first prism associated with the first optical system; and a second prism associated with the second optical system.
(9) In the imaging device according to any one of (6) to (8) mentioned above, a reflection surface of the prism may be parallel to the optical axis of the optical system.
(10) The imaging device according to any one of (6) to (9) mentioned above may further include a processor configured to separate an image captured by the imaging element into first image components associated with the first light and second image components associated with the second light.

Although the embodiments of imaging methods using the imaging devices 10, 100, 101, 102, and 103 have been described above, the embodiments of the present disclosure may have implementation aspects not only as a method or a program for implementing the device but also as a storage medium on which the program is stored (examples include an optical disk, a magneto-optical disk, a CD-ROM, a CD-R, a CD-RW, a magnetic tape, a hard disk drive, and a memory card).

The implementation aspect of the program is not limited to an application program such as object code compiled with a compiler or program code executed by an interpreter, and the implementation aspect may also be in the form of a program module or the like to be embedded into an operating system. The program need not be configured such that all the processes are executed only by a CPU on a control substrate. The program may be configured as necessary such that part or all of the program is executed by an expansion board added to a substrate or another processing unit mounted on an expansion unit.

### REFERENCE SIGNS

10, 100, 101, 102, 103 imaging device
11 imaging optical system (11A: first imaging optical system, 11B: second imaging optical system)
12, 121 imaging element
13, 130 optical element (13A: first optical element, 13B: second optical element)
14 controller
151 micro lens
161 pixel
171 first PD (photodiode)
181 second PD
190 first area
200 second area
21, 210, 211 optical device
22 first lens
23 prism
30 prism (30A: first prism, 30B: second prism, 31: first surface, 32: second surface, 33: third surface)
CRA the angle between the optical axis and the principal ray, determined by the imaging optical system, of light flux emitted from an object point at the angle twice the direct field angle
im1 first image component
im1b first B image component
im1g first G image component
im1r first R image component
im2 second image component
im2b second B image component
im2g second G image component
imA first image (im_A1: first non-superimposed image, im_A2: first superimposed image)
imB second image (im_B1: second non-superimposed image, im_B2: second superimposed image)
ip1, ip2 image point
ipA, ipB first image point, second image point
olim superimposed image
ox optical axis
pa specified area
rcim restored image
pp an object point at the angle twice the direct field angle
pp1, pp2, pp3 object point
ra light reception area (raA: first light reception area, raB: second light reception area)

## Claims

1. An optical device comprising:
an optical system configured to focus incident first light and form an image in a specified area;
an optical element configured to guide second light to the specified area, the second light having a principal ray that is incident on the optical system and angle between which and an optical axis of the optical system differs from angle between a principal ray of the first light and the optical axis of the optical system; and
a prism located in a region surrounded by the optical system, the optical element, and the specified area.

2. The optical device according to claim 1, wherein
the optical element comprises a reflection surface configured as at least one surface of the prism.

3. The optical device according to claim 1 or 2, wherein
an angle between the principal ray of the second light and the optical axis is larger than an angle between the principal ray of the first light and the optical axis.

4. The optical device according to claim 1 or 2, wherein
the optical element comprises a mirror configured to reflect the second light and guide the reflected second light to the specified area.

5. An optical device comprising:
an optical system configured to focus incident first light and form an image in a specified area;
an optical element configured to guide second light to the specified area, the second light having a principal ray that is incident on the optical system and angle between which and an optical axis of the optical system differs from angle between a principal ray of the first light and the optical axis of the optical system; and
a prism located on at least part of optical paths of the first light and the second light output from the optical system.

6. An imaging device comprising:
the optical device according to claim 1, 2, or 5; and
an imaging element comprising an imaging area overlapping the specified area.

7. The imaging device according to claim 6, wherein
the optical system comprises first and second optical systems that have different optical axes and whose subjects are partially common, and
part of an image formed by the first optical system and part of an image formed by the second optical system are superimposed in a light reception area of the imaging element.

8. The imaging device according to claim 6, wherein
the optical system comprises first and second optical systems that have different optical axes and whose subjects are partially common, and
the prism comprises:
a first prism associated with the first optical system; and
a second prism associated with the second optical system.

9. The imaging device according to claim 6, wherein
a reflection surface of the prism is parallel to the optical axis of the optical system.

10. The imaging device according to claim 6, further comprising
a processor configured to separate an image captured by the imaging element into first image components associated with the first light and second image components associated with the second light.
